# EUROPEAN PATENT APPLICATION

(11) **EP 4 737 293 A1**
(43) Date of publication of application: **06.05.2026**
(21) Application number: 23943227.1
(22) Date of filing: 15.10.2023
(51) Int. Cl.: B62M 11/16, B60B 27/04

(54) **VARIABLE-SPEED HUB**

(30) Priority: 29.06.2023 CN 202310778370
(71) Applicant: Kunshan Karasawa Clean Energy Technology Co., Ltd, Suzhou, Jiangsu 215300 (CN)
(72) Inventor: WU, Zhiguo, Suzhou, Jiangsu 215300 (CN); WANG, Xiaohong, Suzhou, Jiangsu 215300 (CN)
(74) Representative: Patent 42
(86) International application number: PCT/CN2023/124636
(87) International publication number: WO 2025/000748

(57) **Abstract**

The present invention relates to a variable-speed hub, including a hub housing, a first-level drive component, and a second-level drive component. The second-level drive component includes a second clutch and a second spline. The second clutch is fixed to the hub housing via a second pawl and rotates along with the hub housing, to achieve power transmission. The second pawl is located on an outer peripheral side of the second spline. The present invention provides an effective coupling and decoupling mechanism, and the second pawl, when overtaking a plurality of spline parts, can decouple from an external spline through the design of a drive arm. Additionally, the external spline includes a plurality of spline parts and a slope surface, providing smooth coupling and decoupling operations. The present invention provides a variable-speed hub with compact structure and reliably operation, which can be applied in various mechanical transmission systems.

## Description

### Technical Field

The present invention belongs to the field of riding vehicles, and in particular to the improvement of a variable-speed hub.

### Background

In prior art, bicycles, electric bikes, and other vehicles can provide automatic speed changing functions that are achieved through the arrangement of an automatic variable-speed hub. A power input end of the automatic variable-speed hub is connected to a freewheel of a bicycle or a motor output shaft of an electric bike to provide power. According to the inputted rotational speed, the variable-speed hub is capable of automatically changing the gear ratio between the input and output ends, to automatically adjust the traveling speed of the bicycle or electric bike, achieving high-speed travel and low energy consumption effect. Requiring no manual operation and being convenient in riding, the variable-speed hub is widely praised.

The function of the variable-speed hub is generally achieved through built-in first, second, or third-level power output devices. Typically, the first-level power output device is configured to directly drive a hub housing; the second-level power output device, after being sped up through a planetary gear set, is configured to drive the hub housing; and the third-level power output device, after being further sped up based on the second-level rotational speed through a planetary gear set, is configured to drive the hub housing.

There are problems in two aspects in prior art. 1. The coupling or decoupling of the power transmission relationship between a clutch device and the hub housing is driven by the rotational force inputted from the power end. After stopping coasting, the user needs to pedal with low resistance to couple the clutch with the hub housing, so as to reach the gear corresponding to the rotational speed. Pedaling with low resistance brings the user a short and rapid sensation of "empty pedaling", resulting in a poor riding experience.

2. In prior art, being arranged inside the spline, a pawl of the clutch is coupled with the interior of the spline when the rotational speed reaches the corresponding gear. Due to the small internal radius of the spline, the corresponding force arm of the pawl is smaller, and the end surface where the pawl matches with the spline bears a greater torque, which can cause greater stress on the pawl itself, or result in a shaft of the pawl being jammed, leading to a failure in upshifting or downshifting. Additionally, the arrangement of pawl inside the spline leads to a more complex structure and assembly process of the clutch.

### Summary

An objective of the present invention is to provide a variable-speed hub that avoids pedal skipping, reduces pawl damage, prevents jamming, and simplifying the structure.

Specifically, the present invention provides a variable-speed hub, including:
a hub housing;
a first-level drive component, directly driving the hub housing via a first pawl; and
a second-level drive component, connected to the first-level drive component via a planetary gear set.

The second-level drive component includes a second clutch. The second clutch is fixed to the hub housing, rotates along with the hub housing, and is used for driving a second spline of the hub housing.

The second clutch includes a second pawl that couples or decouples the power transmission relationship between the second spline and the hub housing according to a rotational speed of the hub housing.

The second pawl is arranged on an outer peripheral side of the second spline.

In a preferred example of the present invention, the second spline includes an external spline, and the second pawl is coupled with or decoupled from a plurality of spline parts of the external spline of the second spline.

In a preferred example of the present invention, the first-level drive component includes a planet gear and a planet carrier of the planetary gear set, with the planet gear rotatably fixed on the planet carrier. The second-level drive component includes a gear ring of the planetary gear set, and the second spline is arranged on the gear ring to rotate along with the gear ring.

In a preferred example of the present invention, the second pawl includes a rotating shaft, and a drive arm connected to the rotating shaft and rotating around the rotating shaft. A distal end of the drive arm away from the rotating shaft is configured to couple with or decouple from the plurality of spline parts. The distal end is arranged at a position radially close to the plurality of spline parts, and the rotating shaft is arranged at a position radially away from the plurality of spline parts.

In a preferred example of the present invention, the distal end of the drive arm away from the rotating shaft has a first width, and a proximal end close to the rotating shaft has a second width. The first width is smaller than the second width, and an arc transition part is formed at the transition between the first width and the second width.

In a preferred example of the present invention, the plurality of spline parts includes a matching groove configured to match with the distal end, and a driving surface and a circumferential outer arc surface that decouple the second pawl and the second spline; and the driving surface is a slope surface that inclines up to the circumferential outer arc surface.

In a preferred example of the present invention, when the second pawl overtakes the plurality of spline parts, the second pawl rises to the circumferential outer arc surface along the driving surface of the spline part located ahead in a rotation direction of the hub housing, and the arc transition part close to the rotating shaft matches with the circumferential outer arc surface, allowing the distal end of the drive arm to deflect at a certain angle to be away from the circumferential outer arc surface; and the angle allows a retaining structure of a second clutch plate in the second clutch to match with a distal end of the second pawl, decoupling the power transmission relationship between the second pawl and the external spline of the second spline.

In a preferred example of the present invention, the external spline of the second spline includes at least 12 or 14 spline parts.

In a preferred example of the present invention, the second clutch includes the second clutch plate, a second centrifugal block, and the second pawl; the second centrifugal block is fixed to a second end cap of the hub housing via the rotating shaft; and the second end cap includes a groove for accommodating the second pawl, and the groove includes a shaft groove, and the rotating shaft of the second pawl is capable of rotating inside the shaft groove;
when the rotational speed of the hub housing is higher than a second rotational speed, the second centrifugal block drives the second clutch plate to rotate in a direction opposite to the rotation direction of the hub housing, allowing the second clutch plate to rotate to a first position where the second clutch plate couples the second pawl with the external spline of the second spline; and
when the rotational speed of the hub housing is lower than the second rotational speed, the second centrifugal block drives the second clutch plate to rotate in the same direction as the rotation direction of the hub housing, allowing the second clutch plate to rotate to a second position where the second clutch plate decouples he second pawl from the external spline of the second spline.

In a preferred example of the present invention, when the second pawl is coupled with the second spline, a bearing pressure on a matching surface is F=T/R1, R1 being a radius of the external spline of the second spline, and T being an input torque of the planetary gear set.

In a preferred example of the present invention, the following is further included:
a third-level drive component, which is connected to the second-level drive component via a planetary gear set;
the third-level drive component includes a third clutch, the third clutch being fixed to the hub housing, rotating along with the hub housing, and being configured to drive a third spline of the hub housing;
the third clutch includes a third pawl for coupling or decoupling the power transmission relationship between the third spline and the hub housing according to the rotational speed of the hub; and
the third pawl is arranged on an outer peripheral side of the third spline.

The third spline includes an external spline, and the third pawl is coupled with or decoupled from a plurality of spline parts of the external spline of the third spline.

In a preferred example of the present invention, the third clutch of the third-level drive component and the second clutch of the second-level drive component are mirror-image structures of each other.

In a preferred example of the present invention, the external spline of the third spline includes at least 14 or 12 spline parts.

In a preferred example of the present invention, the gear ring of the planetary gear set includes a fourth spline. The fourth spline includes an external spline. The fourth spline matches with the internal spline of the second spline, to transmit power from the gear ring to the second spline.

In a preferred example of the present invention, the fourth spline includes an internal spline, and the third-level drive component includes a planet carrier component. The planet carrier component includes a fifth spline that matches with an internal spline of the fourth spline.

In a preferred example of the present invention, the third-level drive component includes a gear ring matching with the planet carrier component. The gear ring includes a sixth spline, and the sixth spline is an external spline. The sixth spline matches with an internal spline of the third spline.

In a preferred example of the present invention, the third clutch includes a third clutch plate, a third centrifugal block, and a third pawl; the third centrifugal block is fixed to a third end cap of the hub housing via a rotating shaft; the third end cap includes a groove accommodating the third pawl, and the groove includes a shaft groove, and a rotating shaft of the third pawl is capable of rotating inside the shaft groove.

When the rotational speed of the hub housing is higher than a third rotational speed, the third centrifugal block drives the third clutch plate to rotate in the direction opposite to the rotation direction of the hub housing, allowing the third clutch plate to rotate to a first position where the third clutch plate couples the third pawl with the third external spline.

When the rotational speed of the hub housing is lower than the third rotational speed, the third centrifugal block drives the third clutch plate to rotate in the same direction as the rotation direction of hub housing, allowing the third clutch plate to rotate to a second position where the third clutch plate decouples the third pawl from the third external spline.

In a preferred example of the present invention, during acceleration of the hub housing/vehicle: when the rotational speed of the hub housing reaches the first rotational speed, the first pawl directly drives the hub housing, the second pawl is decoupled from the second spline, and the third pawl is decoupled from the third spline. When the rotational speed of the hub housing reaches the second rotational speed, the first pawl is in an overtaking state, the second pawl is coupled with the hub housing, and the third pawl is decoupled from the third spline. When the rotational speed of the hub housing reaches the third rotational speed, both the first pawl and the second pawl are in an overtaking state, and the third pawl is coupled with the third spline.

In a preferred example of the present invention, when the rotational speed of the hub housing is higher than the third rotational speed, all the first pawl, the second pawl, and the third pawl are in an overtaking state.

In a preferred example of the present invention, the third rotational speed > the second rotational speed > the first rotational speed.

In a preferred example of the present invention, during deceleration: when the rotational speed of the hub housing is lower than the third rotational speed but higher than the second rotational speed, the third pawl is in a decoupled state, the second pawl is in an overtaking state, and the first pawl is in an overtaking state. When the hub housing rotates at the second rotational speed, the third pawl is in a decoupled state, the second pawl is in a coupled state, and the first pawl is in an overtaking state. When the rotational speed of the hub housing is lower than the second rotational speed but higher than the first rotational speed, the third pawl is in a decoupled state, the second pawl is in a decoupled state, and the first pawl is in an overtaking state. When the hub housing rotates at the first rotational speed, the third pawl is in a decoupled state, the second pawl is in a decoupled state, and the first pawl is in a coupled state.

In a preferred example of the present invention, the hub housing is a closed housing, and the second end cap and the third end cap are fixed inside the closed housing.

In a preferred example of the present invention, the second end cap and the third end cap are detachably fixed to the main body of the housing.

In a preferred example of the present invention, a through-hole for passing the fourth spline through is disposed on the second end cap, and a through-hole for passing the fifth spline through is disposed on the third end cap.

In a preferred example of the present invention, the second spline includes an external spline and an internal spline, with a radius of the external spline being R1 and a radius of the internal spline being R2, where R2 < R1.

Compared to the prior art, the present application has many aspects of advancements. 1. The second pawl and the third pawl are arranged on the outer peripheral sides of the second spline and third spline, respectively, and match with the spline parts on the peripheries of the splines. Due to the larger external radius of the second spline and the third spline, the torque is increased, so that the twisting force on the end surface of the pawl when matching with the spline is smaller, and the stress on the matching surface is smaller, thereby avoiding the problem of failure in gear shifting due to pawl damage or jamming. 2. Compared to the prior art where the pawl is arranged inside the internal spline and match with the internal spline, matching the pawl with the external spline allows for more spline parts to be arranged on the external spline, so that the time for matching the pawl with the spline is shorter at the same rotational speed or riding speed, reducing the sense of jerkiness during gear shifting. 3. The second clutch and the third clutch are fixed to the hub housing via the second end cap and third end cap, respectively. The centrifugal block of the clutch operates according to the rotational speed of the hub housing. The timing for coupling or decoupling the second pawl and the third pawl with the external splines is determined by the hub housing, which is based on the actual riding speed of the bicycle. When the user selects coasting, the variable-speed hub will also shift to the appropriate gear based on the coasting speed, eliminating the need for the user to shift gears in the sensation of empty pedaling, avoiding the issue of empty pedaling, preventing the user from losing balance due to empty pedaling, and enhancing the riding experience.

### Brief Description of the Drawings

FIG. 1 is an overall schematic structural diagram of a variable-speed hub in Example 1.
FIG. 2 is a schematic diagram of an axial cross-sectional structure of the variable-speed hub in Example 1.
FIG. 3 is a schematic diagram of an axial exploded structure of the variable-speed hub in Example 1.
FIG. 4 is a schematic structural diagram of a drive body of the variable-speed hub in Example 1.
FIG. 5 is a schematic diagram of an axial exploded structure of a second clutch of the variable-speed hub in Example 1.
FIG. 6 is a schematic structural diagram of a second spline of the variable-speed hub in Example 1.
FIG. 7 is a schematic structural diagram of a second pawl of the variable-speed hub in Example 1.
FIG. 8 is a schematic diagram of a second end cap of the variable-speed hub in Example 1.
FIG. 9 is a schematic diagram of a second clutch plate of the variable-speed hub in Example 1.
FIG. 10 is a schematic structural diagram of a centrifugal block of the variable-speed hub in Example 1.
FIG. 11 is a schematic diagram showing the upshifting and downshifting states of the second clutch of the variable-speed hub in Example 1.
FIG. 12 is a schematic diagram of an axial cross-sectional structure of a variable-speed hub in Example 2.
FIG. 13 is a schematic structural diagram of a hub housing in Example 2.
FIG. 14 is a schematic structural diagram of a third end cap in Example 2.
FIG. 15 is a schematic diagram of an axial exploded structure of a second planetary gear set and a third planetary gear set in Example 2.

### Detailed Description

The technical solutions of the present application are further described in detail with reference to the accompanying drawings below, to assist those skilled in the art in understanding the technical solutions of the present application, rather than limiting the scope of protection. The scope of protection of the present application is defined by the claims.

The terms "first", "second", etc, in the present application are used for distinguishing between different technical features rather than limiting the scope of protection. The term "coupling" refers to a mechanical connection relationship between different assemblies through direct or indirect power transmission, and the term "decoupling" refers to the disconnection of direct or indirect power transmission between different assemblies. The term "axial direction" refers to the extension direction of the shaft of the hub housing or a direction parallel to the extension direction. The term "radial direction" refers to the extension direction of the diameter of the rotating surface of the hub assemblies. The term "overtaking state" refers to a state where the rotational speed of the pawl is less than that of the matching hub housing, spline, or other assemblies, causing the pawl to be overtaken by these assemblies in the rotation direction.

### Example 1

### Overall external structure of variable-speed hub

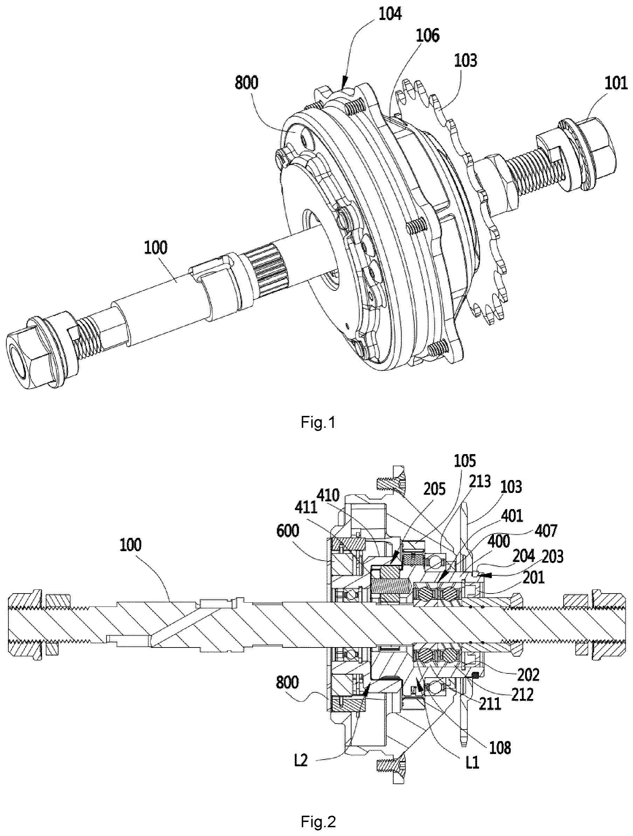

Referring to a variable-speed hub shown in FIG. 1, which includes a hub housing 104 and a hub axle 100. The entire hub is supported on the hub axle 100. The hub axle 100 can be coaxial with a bicycle, an electric vehicle, a motor shaft, etc. Fixing nuts 101 for fixing the hub axle 100 on the above mentioned vehicles are arranged on two ends of the hub axle 100. The fixing nut 101 can be replaced with a quick-disassembly structure.

Referring to FIG. 1, FIG. 2, and FIG. 3, a drive freewheel 103 for inputting power to the hub is arranged. The drive freewheel 103 can be connected to a chain of a user. The chain can be connected to a pedal freewheel of the user or a motor driver. The drive freewheel 103 is directly connected to a power input device of a first-level drive component L1 of the variable-speed hub, serving as a power input source for the entire variable-speed hub. The hub housing 104 is connected to a wheel hub of a vehicle, for outputting the original power or power after speed variation to the wheel hub, thereby automatically changing the traveling speed of the vehicle.

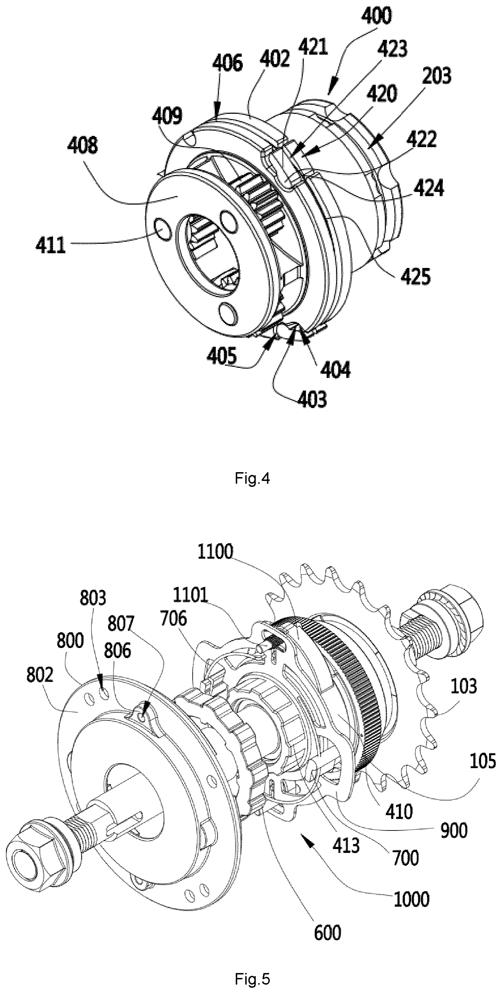

The hub housing 104 includes a main body part 106 and a second end cap 800. The main body part 106 of the hub housing 104 is formed on a side of the hub housing 104 close to the freewheel, and a main space for accommodating internal parts of the hub housing 104 is formed inside the main body part 106. The second end cap 800 is connected to the main body part 106 via fixing components such as screws and is fixed to one side of the main body part 106. Inside the hub housing 104, the second end cap 800 is configured to fix a second clutch 1000 (as shown in FIG. 5) of a second-level drive component L2, allowing the second clutch 1000 to automatically select upshifting or downshifting according to a rotational speed of the hub housing 104.

Being fixed to the second end cap 800 of the hub housing 104, the second clutch 1000 can rotate synchronously with the hub housing 104, and shift gears according to the rotational speed of the hub housing 104. When the user coasts (e.g., stops pedaling and lets the vehicle coast downhill), the gear of the hub of the vehicle changes according to the speed of the vehicle. In prior art, the clutch typically rotates following the drive component. During coasting of the vehicle, if the user pedals again, the rotational speed of the drive component requires to be increased to a gear-shifting threshold of the clutch. In this process, pedaling resistance is low for the user. However, after the gear shifting, due to the sudden combination of the clutch, the pedaling resistance is suddenly increased, bringing the user a short-lived sensation of empty pedaling and a poor riding experience. In the present application, being fixed to the second end cap 800 of the hub housing 104, the second clutch 1000 rotates with the hub. Even when the user pedals again after coasting, power can be outputted to the hub housing 104 through the second clutch 1000. There is no difference in riding experience compared to bicycles without automatic gear shifting during gear shifting. The sensation of empty pedaling after coasting or temporarily stopping pedaling is eliminated.

Referring to FIG. 2, FIG. 3 and FIG. 4, the first-level drive component L1 includes a drive body 400. The hub housing 104 internally includes the first-level drive component L1 for directly driving the hub housing 104. The first-level drive component L1 includes the drive body 400 connected to the drive freewheel 103. The drive freewheel 103 is fixed to the drive body 400 via a clamping structure, and the drive freewheel 103 simultaneously transmits rotational power to the drive body 400 via the clamping structure. A groove 203 is disposed at a connection between the drive body 400 and the drive freewheel 103, to allow the entry of a circular opening 107 that is internally connected to the drive freewheel 103. A clamping ring 204 is arranged inside the groove 203, and the clamping ring 204 is configured to axially fix the position of the drive freewheel 103, preventing the drive freewheel 103 from moving axially.

The drive body 400 includes a structure for driving the hub housing 104, and a part of a planetary gear set 205 for connecting to the second-level drive component L2. The drive body 400 is in a hollow structure, with one end near the drive freewheel 103 sealed by a sealing ring 201. A first ball bearing 211 and a second ball bearing 212 are arranged inside a hollow cavity 401 of the drive body 400. The first ball bearing 211 and the second ball bearing 212 are limited within the hollow cavity 401 by a retaining ring 202 inside the hollow cavity 401. Simultaneously, the first ball bearing 211 and the second ball bearing 212 rest on the hub axle 100. A stepped structure 108 is arranged on a surface of the hub axle 100, to limit the axial position of the first ball bearing 211 and the second ball bearing 212. The axial position of the drive body 400 can be limited by this structure.

Referring to FIG. 4, one side of the drive body 400 away from the drive freewheel 103 includes a first pawl mounting seat 402 with an increased diameter. The first pawl mounting seat 402 includes a mounting groove 403 for mounting a first pawl 420. The first pawl 420 includes a drive arm 421 and a rotating shaft 422 connected to the drive arm 421. The first pawl mounting groove 403 internally includes a drive arm groove 404 and a shaft groove 405 corresponding to the drive arm 421 and the rotating shaft 422, respectively. The first pawl 420 is capable of rotating within the mounting groove 403.

The mounting seat 402 includes a spring mounting groove 406 arranged around the mounting seat 402. A hoop spring 425 is mounted inside the spring mounting groove 406. A mounting groove 423 for mounting the hoop spring 425 is disposed on the first pawl 420. A force application point 424 for the hoop spring 425 is arranged at a position of the first pawl 420 near the rotating shaft 422, so that the compressive force of the hoop spring 425 acts on the force application point 424 behind the rotating shaft 422, further allowing the drive arm 421 of the first pawl 420 to open at a certain angle away from the mounting groove 403, thereby ensuring that the first pawl 420 remains to be connected to a gear ring 105 of the hub housing 104 at low speeds (when the variable-speed hub is in the first gear).

When the drive body 400 rotates, it directly drives the gear ring 105 of the hub housing 104 via the first pawl 420, and being mounted inside the hub housing 104, the gear ring 105 of the hub housing 104 further transmits the power to the hub housing 104. When a rotational speed of the hub housing 104 is higher than that of the drive body 400, the first pawl 420 is overtaken by the gear ring 105 of the hub housing 104, and at this moment, the drive arm 421 of the first pawl 420 elastically retracts around the rotating shaft 422. When the drive arm 421 of the first pawl 420 is between two consecutive teeth of the gear ring 105, it is reset by the hoop spring 425. At this point, the first pawl 420 is in an overtaking state, and the power from the drive body 400 is not directly transmitted to the hub housing 104.

An exterior of the drive body 400 includes a third ball bearing 213. A stop ring 407 is arranged on a side of the third ball bearing 213 axially close to the drive freewheel 103, and the stop ring 407 is configured to limit the axial position of the third ball bearing 213. The third ball bearing 213 is configured to support the hub housing 104, allowing the hub housing 104 to freely rotate relative to the drive body 400, and enabling the hub housing 104 to rotate at different relative speeds in different gears.

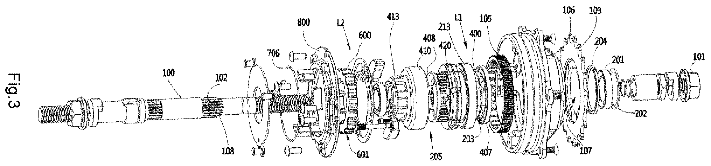

A planetary gear carrier 408 is arranged on one side of the mounting seat 402 of the drive body 400. The planetary gear carrier 408 includes three planet gears 409, and planet gear axles 411 for arranging the planet gears. The three planet gears 409 are engaged with a sun gear 102 (as shown in FIG. 3) arranged at the center of the hub axle 100. When the drive body 400 rotates, the planetary gear carrier 408 and the planet gears 409 also rotate. The rotation of the planet gears 409 simultaneously drives a gear ring 410 of a planetary gear set 205. Since the sun gear 102 is fixed, the planetary gear carrier 408 rotates, and a rotational speed of the gear ring 410 of the planetary gear set 205 is higher than that of the drive body 400.

### Second-level drive component

Referring to FIG. 2, FIG. 3 and FIG. 5, the second-level drive component L2 is connected to the first-level drive component L1 via the planetary gear set 205. The second-level drive component L2 includes a second clutch 1000, and a second spline 600 for driving the hub housing 104. The gear ring 410 of the planetary gear set 205 includes a fourth spline 413, and the fourth spline 413 is an external spline configured to engage with the second spline 600, to transmit power to the second clutch 1000.

### Second clutch

The second clutch 1000 includes a second clutch plate 900, a second centrifugal block 1100, and a second pawl 700. The second centrifugal block 1100 is fixed to the second end cap 800 via a rotating shaft 1101. The second end cap 800 includes a groove 804 for accommodating the second pawl 700. The groove 804 includes a shaft groove 805. A rotating shaft 701 of the second pawl 700 is capable of rotating inside the shaft groove 805.

Referring to FIG. 5, the second clutch 1000 is fixed to the hub housing 104 via the second end cap 800 and rotates along with the hub housing 104. According to the rotational speed of the hub housing 104, the second clutch 1000 couples or decouples the power transmission relationship between the second spline 600 and the hub housing104. **The** second pawl 700 is arranged on an outer peripheral side of the second spline 600.

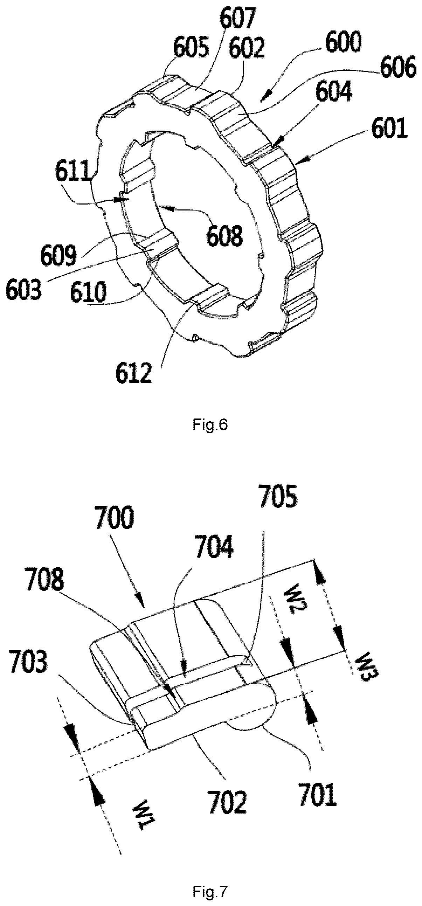

Referring to FIG. 5 and FIG. 7, in prior art, typically, the clutch and the pawl thereon rotate with the hub, and the pawl is arranged inside the internal spline of the spline (equivalent to the second spline 600 in the present application). **In** the present application, the second pawl 700 is arranged on the outer peripheral side of the second spline 600. Compared with the solution where the second pawl is arranged on the internal spline, the assembly structure of the present application is simpler. Meanwhile, when the second pawl 700 matches with the external spline, due to a larger radius of the external spline, under the same torque, the torque applied on the second pawl 700 and the external spline of the second spline 600 is smaller, and the stress borne by their matching end face 703 is also smaller, thereby avoiding problems of failure in gear shifting due to the damage and getting stuck of the second pawl 700.

### Second spline

Referring to FIG. 5, FIG. 6 and FIG. 11, the second spline 600 includes an external spline 601 and an internal spline 608. The second pawl 700 is coupled with or decoupled from a plurality of spline parts 602 of the external spline 601 of the second spline 600. The external spline 608 includes a plurality of spline parts 602, and the internal spline 608 includes a plurality of spline parts 612. Each spline part 602 of the external spline has the same structure, and each spline part 612 of the internal spline 608 has the same structure. The spline part 612 of the internal spline 608 includes a first inclined surface 609, a second inclined surface 610, and a top surface 603 connected to the first inclined surface 609 and the second inclined surface 610. An inclination angle of the first inclined surface 609 is greater than that of the second inclined surface 610. The spline part 612 of the internal spline 608 is designed to match with a fourth spline 413 of a gear ring, to receive power from the gear ring 410. In other words, the second spline 600 is arranged on the gear ring 410 and rotates along with the gear ring 410.

A circumferential spacing 611 is formed among the plurality of spline parts 612 of the internal spline 608. The circumferential spacing 611 serves for circumferentially accommodating the spline parts of the fourth spline 413 of the gear ring 410. Additionally, a circumferential spacing of the fourth spline 413 is smaller than the circumferential spacing 611 among the spline parts 612 of the internal spline, allowing for the formation of a circumferential buffer space between the fourth spline 413 of the gear ring and the spline part 612 of the internal spline 608 of the second spline 600. This buffer space can reduce spline impact during gear shifting.

The plurality of spline parts 602 of the external spline include a matching groove 604 for matching with the second pawl 700, as well as a circumferential outer arc surface 605 and a driving surface 606. The driving surface 606 is a slope surface that rises obliquely to the circumferential outer arc surface 605. The matching groove 604 is roughly a "J"-shaped cross section, with a semicircular bottom. A radial height of the matching groove 604 is less than that of the circumferential outer arc surface 605 and the driving surface 606, and a buffer surface 607 is formed between the matching groove 604 and the driving surface 606.

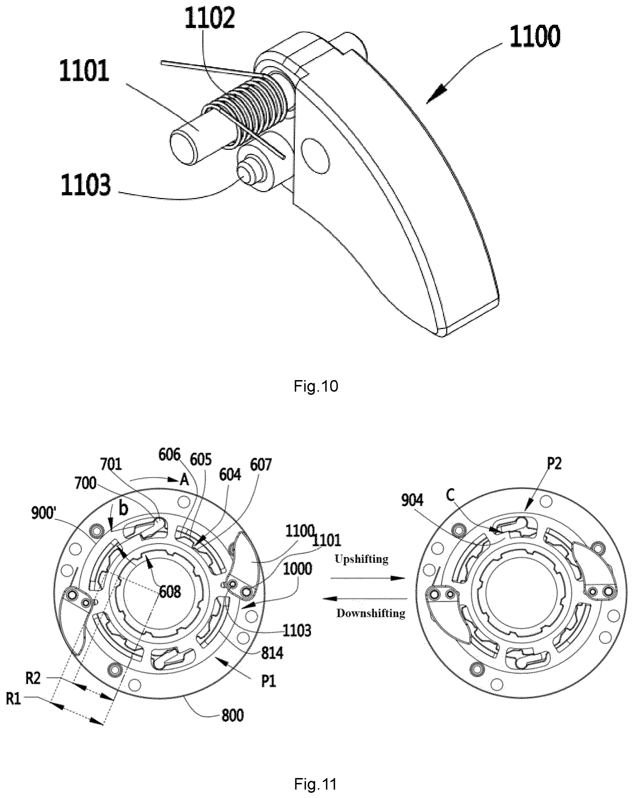

Referring to FIG. 11, a radius of the external spline 601 of the second spline 600 is R1, and a radius of the internal spline 608 is R2, with R2 < R1. Assuming a torque is T, a twisting force of the internal spline is F1 and a twisting force of the external spline is F2, then T=F1*R1=F2*R2, and F2=F1*(R1/R2). Since R2 < R1, F2 < F1, the smaller F2 reduces the stress impact on the matching surface 703 of the second pawl 700, thereby preventing damage or jamming of the second pawl 700.

When the second pawl 700 matches with the external spline 601 of the second spline 600, the gear-shifting response time can be reduced. Due to a larger diameter of the external spline 601 of the second spline 600, there are more spline parts 602 on the external spline 601 compared to the spline parts 612 on the internal spline 608. Accordingly, after gear shifting, the matching time between the second pawl 700 and the spline part 602 is shorter. In a preferred solution, there are at least 10 spline parts 602 are arranged at the external spline 601 of the second spline 600. In a preferred solution, there are at least 14 or 12 spline parts 602 are arranged at the external spline 601 of the second spline, with a response time after gear shifting being approximately t1=(2π/14)/w or (2π/12)/w, where w is a rotational angular velocity, showing that the response time is negatively proportional to the number of spline parts 602. Relatively speaking, the larger circumferential size of the external spline 601 allows for more spline parts 602 arranged thereon, and correspondingly, the gear-shifting response time is shorter, avoiding the impact force and noise between the pawl and the matching surface of the spline part 602 during gear combination.

### Second pawl

Referring to FIG. 7 and FIG. 11, the second pawl 700 is arranged on the outer peripheral side of the second spline 600 and mounted in the groove 804 of the end cap 800 of the hub housing 104 on the second clutch 1000. The second pawl 700 includes a rotating shaft 701, and a drive arm 702 connected to the rotating shaft 701 and rotating around the rotating shaft 701. A distal end (at an end surface 703, and a part near this end surface) of the drive arm 702 away from the rotating shaft 701 is configured to be coupled with or decoupled from the plurality of spline parts. The distal end is arranged at a position close to the plurality of spline parts 602, and the rotating shaft 701 is arranged at a position away from the plurality of spline parts 602. When coupled, the end surface 703 of the drive arm 702 abuts against a surface of the matching groove 604 and transfers power to the hub housing 104 through the end surface 703.

The center of the second pawl 700 includes a spring groove 704. The spring groove 704 penetrates through the second pawl 700 in a thickness direction, and an inclined surface 705 for spring parking near the rotating shaft 701 is formed. A spring 706 is arranged inside the second pawl 700. When the second pawl 700 is not constrained by the second clutch plate 900, the spring 706 deflects the drive arm 702 of the second pawl 700 to a position close to the spline part 602 of the second spline.

The distal end of the drive arm 702 away from the rotating shaft 701 has a first width W1, and a proximal end close to the rotating shaft 701 has a second width W2, the first width W1 being smaller than the second width W2. An arc transition part 708 is formed at the transition between the first width W1 and the second width W2. The function of the first width W1, the second width W2, and the arc transition part 708 is that when the second pawl 700 overtakes the spline part 602, the distal end of the drive arm 702 of the second pawl 700 can lift up at a certain angle, approximately as shown by angle b in FIG. 11. With the help of the smaller first width W1 and the angle b, a gap C is formed between the circumferential outer arc surface 605 and the drive arm 702 of the second pawl 700. The gap C allows a retaining structure 904 of the second clutch plate 900 to enter, enabling decoupling between the second pawl 700 and the second spline 600.

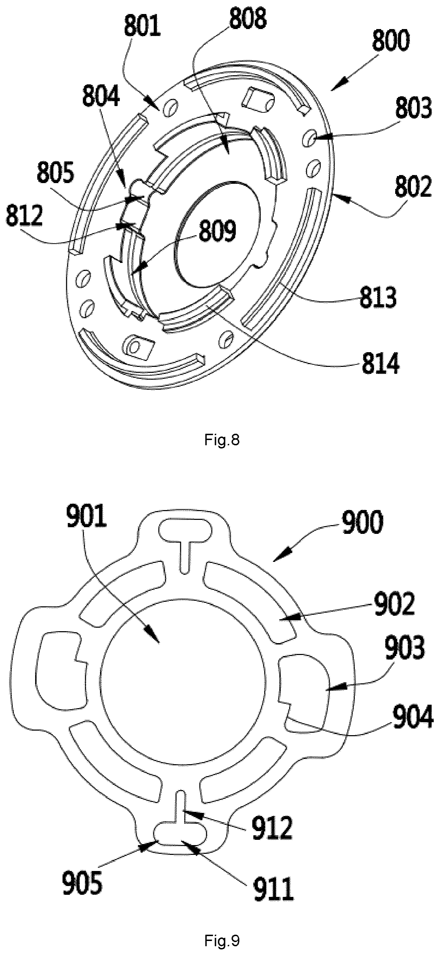

Referring to FIG. 9 and FIG. 11, in a preferred example of the present invention, when the second pawl 700 overtakes the plurality of spline parts 602, it rises to the circumferential outer arc surface 605 along the driving surface 606 of the spline part located ahead in the rotation direction A of the hub housing 104. The arc transition part 708 close to the rotating shaft 701 matches with the circumferential outer arc surface 605, allowing the distal end of the drive arm 702 to deflect at a certain angle away from the circumferential outer arc surface to form a gap C. The gap C allows the retaining structure 904 of the second clutch plate 900 in the second clutch 1000 to match with the first width W1 at the distal end of the second pawl 700, thereby completing decoupling of the second pawl 700 from the external spline 601 of the second spline 600.

### Second end cap

Referring to FIG. 5 and FIG. 8, the second end cap 800 is divided into an inner surface 801 and an outer surface 802. A plurality of screws (not shown in the figure) for fixing the second end cap 800 to the main body part 106 of the housing pass through the outer surface 802 of the second end cap 800. A plurality of fixing holes 803 for passing the screws through are disposed on the second end cap 800, and those screws pass through the fixing holes 803 to fix the second end cap 800 to the main body part 106 of the hub housing 104. The end cap 800 and the main body part 106 of the hub housing 104 is connected in a sealed manner, and a sealing gasket can be placed at a connecting surface therebetween. The second end cap 800 includes a plurality of thickened steps 806, and a plurality of fixing holes 807 are disposed on the thickened steps 806, for fixing the rotating shaft 1101 of the second centrifugal block 1100. The second centrifugal block 1100 is fixed to the fixing hole 807 on the second end cap 800 of the hub housing 104 via the rotating shaft 1101.

The inner surface 801 of the second end cap 800 is configured to fix the second clutch 1000. The second end cap 800 has a certain axial thickness that ensures the formation of a circular cavity 808 inside the second end cap 800. A circumferential wall of the circular cavity 808 includes an annular groove 809 for placing springs, and the annular groove 809 is configured to fix the spring 706 of the second pawl 700. The circumferential wall of the circular cavity 808 includes a groove 804 for accommodating and mounting the second pawl 700, and the groove 804 includes a shaft groove 805, and a groove 812 for accommodating the drive arm 702 of the second pawl 700. When the second pawl 700 is in a released state, the drive arm 702 deviates from the groove 812, allowing the second pawl 700 to engage/match with the spline part 602 of the second spline 600 or to be in an overtaking state.

The periphery of the circular cavity 808 includes a plurality of arc retaining strips 813, which serve to fix the radial position of the second clutch plate 900 and allow the second clutch plate 900 to rotate at a certain angle, enabling the second clutch plate 900 to switch between a first position P1 and a second position P2, thereby controlling the coupling or decoupling of the second pawl 700 with the second spline 600 via the second clutch plate 900.

The periphery of the circular cavity 808 includes a plurality of limiting members 814, whose structure is similar to that of the arc retaining strips 813. The limiting members 814 abut against a periphery of the second clutch plate 900 to limit the radial position of the second clutch plate 900.

### Second clutch plate

Referring to FIG. 9, the center of the second clutch plate 900 includes a mounting hole 901. When mounted, the second clutch plate 900 is mounted on the fourth spline 413 of the gear ring 410. A diameter of the mounting hole 901 is equal to that of the fourth spline 413. A periphery of the mounting hole 901 includes four independent locating holes 902, which are mounted on the plurality of limiting members 814. An arc length of the locating hole 902 is greater than that of the plurality of limiting members 814, allowing the second clutch plate 900 to have an axial rotational space.

Pawl clutch holes 903 are disposed at intervals in a circumference of the mounting hole 901, and the pawl clutch holes 903 are symmetrically arranged around the center of the clutch plate mounting hole 901. A retaining structure 904 is arranged inside the pawl clutch hole 903, for maintaining the decoupled state of the second pawl 700 from the second spline 600 when they are decoupled. The second pawl 700 has a first axial length W3 to match with the second spline 600 or the second clutch plate 900 at different axial positions in the coupled or decoupled state, respectively.

When matching with the second pawl 700, the retaining structure 904 extends into the radial interior of the distal end of the drive arm 702 of the second pawl 700, and a radial height of an upper edge of the retaining structure 904 is higher than that of the spline part 602 of the second spline 600, so that when the retaining structure 904 matches with the second pawl 700, the second pawl 700 is separated from the spline part 602 of the second spline 600.

The second clutch plate 900 also includes an adapter hole 905 of the second centrifugal block 1100, which is roughly formed by "T"-shaped holes including a first capsule hole 911 and a second capsule hole 912. The first capsule hole 911 has a larger radial size and length, and the first capsule hole 911 and the second capsule hole 912 are interconnected. The second centrifugal block 1100 is arranged above the first capsule hole 911 but does not interfere with it.

The second clutch plate 900' shown in FIG. 11 is the second clutch plate 900' in another embodiment, which mainly differs from the second clutch plate 900 shown in FIG. 9 in that it does not have an equivalent hole to the adapter hole 905, and the shaft 1101 of the centrifugal block is directly fixed to the end cap 800; the second clutch plate 900' has a circular outer contour and its diameter is smaller than the maximum diameter of the second clutch plate 900 shown in FIG. 9. The operating principle of the second clutch plate 900' is completely the same as that of the second clutch plate 900. There is no distinction in operating principles in the present application.

### Second centrifugal block

Referring to FIG. 10, the mounting shaft 1101 of the second centrifugal block 1100 is fixed to the second end cap 800 through the adapter hole 905 on the second clutch plate 900. A size of the first capsule hole 911 is larger than a diameter of the mounting shaft 1101, allowing the second clutch plate 900 to have a rotational space. A return spring 1102 is arranged on the mounting shaft 1101 of the second centrifugal block 1100. By adjusting the torque of the return spring 1102, a critical gear-shifting speed of the clutch 1000 can be adjusted accordingly. The second centrifugal block 1100 also includes a drive rod 1103 that drives the second clutch plate 900 to rotate. When rotating along with the second clutch plate 900, the drive rod 1103 rotates around the mounting shaft 1101 of the second centrifugal block 1100 and converts this axial rotation into the rotation of the second clutch plate 900 through the second capsule hole 912. Obviously, during the rotation of the second clutch plate 900, the drive rod 1103 will move radially outwards or inwards relative to the second capsule hole 912.

### Gear shifting process of variable-speed hub

Referring to FIG. 5 and FIG. 11, in the first gear, when the user pedals or drives a device (such as a motor) to drive the drive body 400 to rotate, the drive body 400 rotates along with the drive freewheel 103, and the rotational speed of the drive body 400 remains the same as the inputted speed. The first pawl 420 on the drive body 400 matches with the gear ring 105 of the hub housing 104 and directly drives the hub housing 104 to rotate through the gear ring 105 of the hub housing 104. At this point, the rotational speed of the hub housing 104 is the same as that of the drive body 400, and the rotational speed of the hub housing 104 has not reached the critical gear-shifting speed of the second clutch 1000, and the second clutch 1000 rotates along with the hub housing 104. At this time, the gear ring 410 of the planetary gear set 205 has a higher rotational speed than that of the drive body 400, and the second spline 600 rotates along with the gear ring 410 of the planetary gear set 205. The second spline 600 is in an idling state at this point and outputs no power to the hub housing 104. At this time, the drive arm 702 of the second pawl 700 is held by the retaining structure 904 of the second clutch plate 900, so that the drive arm 702 does not match with the spline part 602 of the second spline 600.

When shifting from the first gear to the second gear, the user accelerates riding, so that the rotational speed of the hub housing 104 reaches the critical rotational speed (second rotational speed) of the second clutch 1000. The centrifugal force (defined in a non-inertial reference frame) of the second centrifugal block 1100 overcomes the reset force of the return spring 1102 and drives the second clutch plate 900 to rotate in the opposite direction (opposite to the rotation direction of the hub housing 104), so that the second clutch plate 900 rotates to the first position P1. In the first position P1, the retaining structure 904 of the second clutch plate 900 releases the second pawl 700. After being released, the second pawl 700 rotates around the rotating shaft 701 under the action of the spring 706, and the drive arm 702 matches with the spline part 602 of the external spline of the second spline 600, allowing the hub housing 104 to be directly driven by the second spline 600. The driving force of the second spline 600 is transmitted to the second end cap 800 through the second pawl 700 and then to the hub housing 104 through the second end cap 800. At this point, the rotational speed of the hub housing 104 is the same as that of the gear ring 410 of the planetary gear set 205 and that of the second spline 600. Due to the acceleration effect of the planetary gear set 205, the rotational speed of the hub housing 104 and the rotational speed of the gear ring 105 of the hub housing 104 are greater than that of the first pawl 420, which is now in an overtaking state. After reaching the critical rotational speed, the second centrifugal block 1100 maintains the position of the second clutch plate 900 without resetting.

When shifting from the second gear to the first gear, the user stops pedaling or pedals slower (below the second rotational speed), and the rotational speed of the hub housing 104 gradually decreases below the critical rotational speed. At this point, the second centrifugal block 1100 resets under the action of the return spring 1102. During the resetting of the second centrifugal block 1100, the second clutch plate 900 resets and rotates (in the same direction as the rotation direction of the hub housing) to the second position P2. At this time, the rotational speed of the hub housing 104 is greater than that of the second spline 600. A front end of the second pawl 700 moves beyond the driving surface 606 of the spline part located in front of the rotation direction A of the hub housing 104 and rises to the circumferential outer arc surface 605. The arc transition part 708 close to the rotating shaft 701 of the second pawl matches with the circumferential outer arc surface 605, allowing the distal end of the drive arm 702 to deflect at a certain angle away from the circumferential outer arc surface 605, to form a gap C. The gap C allows the retaining structure 904 of the clutch plate during the resetting to match with the distal end of the second pawl 700, completing the decoupling of the second pawl 700 from the external spline 601 of the second spline 600. At this point, if the user stops pedaling, the first pawl 420 remains in an overtaking state. If the user pedals again and the rotational speed of the drive body 400 is the same as or greater than that of the hub housing 104, the first pawl 420 re-matches with the gear ring 105 of the hub housing 104 and drives the hub housing 104 to continue rotating in the first gear.

It is to be noted that the power transmission paths differ between the first and second gears. In the first gear, power is transmitted from the drive freewheel 103 (or motor shaft) to the drive body 400, through which, the power is transmitted to the first pawl 420. The power is transmitted to the gear ring 105 of the hub housing through the first pawl 420, and then is transmitted to the hub housing 104 through the gear ring 105. In the second gear, the power is transmitted from the drive freewheel 103 (or motor shaft) to the drive body 400, through which, the power is transmitted to the planet gear 409. Through the planet gear 409, the power is transmitted to the gear ring 410 of the planetary gear set 205, and the gear ring 410 transmits the power to the second spline 600, through which, the power is transmitted to the second pawl 700. The power is then transmitted to the second end cap 800 through the second pawl 700 and then to the hub housing 104 through the second end cap 800.

### Example 2

Based on Example 1, this example shows an improvement. Hereinafter, the structures that are the same as those in Example 1 are briefly described, and structures that differ in Example 1 are described in detail. To distinguish from Example 1, new reference numerals are used in Example 2.

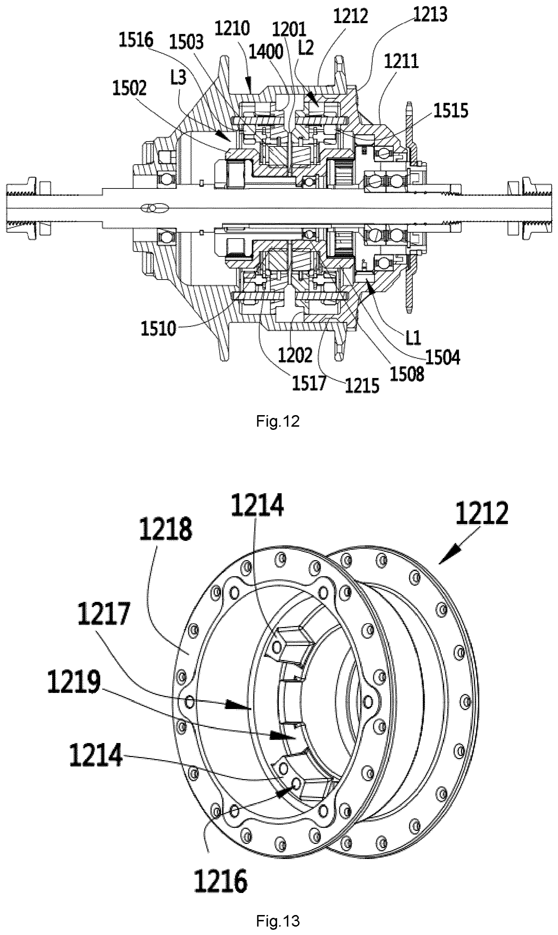

Referring to FIG. 12 for a structure of a three-speed variable-speed hub. The difference from Example 1 lies in that a hub housing 1210 internally includes a second-level drive component L2 and a third-level drive component L3, both of which are arranged inside the hub housing 1210. A second end cap 1202 is connected internally to the hub housing 1210, and simultaneously, a third end cap 1400 of the third-level drive component L3 is connected internally to the hub housing 1210. The second-level drive component L2 and the third-level drive component L3 exhibit a mirror-image symmetrical structure. The mirror-image symmetrical structure can reduce the overall axial length of the variable-speed hub, thereby reducing the overall volume of the hub.

### Hub housing

Referring to FIG. 12 and FIG. 13, the hub housing 1210 is divided into a first part 1211 and a second part 1212. The first part 1211 of the hub housing 1210 is configured to connect to the second end cap 1202 and simultaneously accommodates a first-level transmission component L1. The difference from Example 1 lies in that the first part 1211 of the hub includes an axially extended connecting structure 1215, which is embedded into the second part 1212 of the hub housing 1210 and matches with an inner wall of the second part 1212 of the hub housing 1210. The first part 1211 of the hub housing 1210 further includes a connecting end face 1213, and the connecting end face 1213 of the first part 1211 is connected to a connecting end face 1218 of the second part 1212 of the hub housing via a screw. The second part 1212 of the hub housing 1210 internally includes a plurality of protrusion blocks 1214 arranged along a wall of the hub housing 1210. Screw mounting holes 1216 are disposed on the protrusion blocks 1214, and the protrusion blocks 1214 are configured to fix the third end cap 1400 of the third-level drive component L3 to the hub housing 1210. An annular step 1217 is included at a periphery of the protrusion block 1214, with an axial length higher than that of the protrusion block 1214, forming a height difference with a surface of the protrusion block 1214. This height difference favors the fixation of the third end cap 1400. Similarly, the protrusion blocks 1214 are also arranged at the first part 1211 of the hub housing 1210, facilitating the mounting of the second end cap 1202 onto the first part 1211 of the hub housing 1210.

A rotational speed sensor mounting groove 1219 is included inside the hub housing 1210, and a Hall rotational speed sensor is mounted inside the mounting groove 1219, to determine the rotational speed and gear position of the hub.

### Third end cap

Referring to FIG. 12, FIG. 14, and FIG. 15, the main difference between the third end cap 1400 and that of Example 1 lies in that, a larger opening 1401 is disposed in the middle of the third end cap 1400, allowing a third pawl 1501 and a third spline 1503 to be accommodated inside the larger opening 1401. Additionally, a position where a sixth spline 1510 on a gear ring 1502 of a third planetary gear set 1500 matches with the third spline 1503 passes through the opening 1401.

In this example, the second end cap 1202 and the third end cap 1400 have a same structure, and a partition plate 1201 is arranged between the third end cap 1400 and the second end cap 1202. The partition plate 1201 is configured to isolate a second pawl 1513, the third pawl 1501, a second centrifugal block 1515, a third centrifugal block 1516, the gear ring 1504 of a second planetary gear set 1512, and a gear ring 1502 of the third planetary gear set 1500, which are respectively located inside an opening of the second end cap 1202 and the opening 1401 of the third end cap 1400. The partition plate 1201 can prevent the above mentioned components from moving axially during rotation and prevent interference during their rotation. The partition plate 1201 can be fixed to the second end cap 1202 or the third end cap 1400, or the partition plate 1201 can be freely mounted on one side of the gear ring 1502 of the third planetary gear set 1500.

### Third planetary gear set

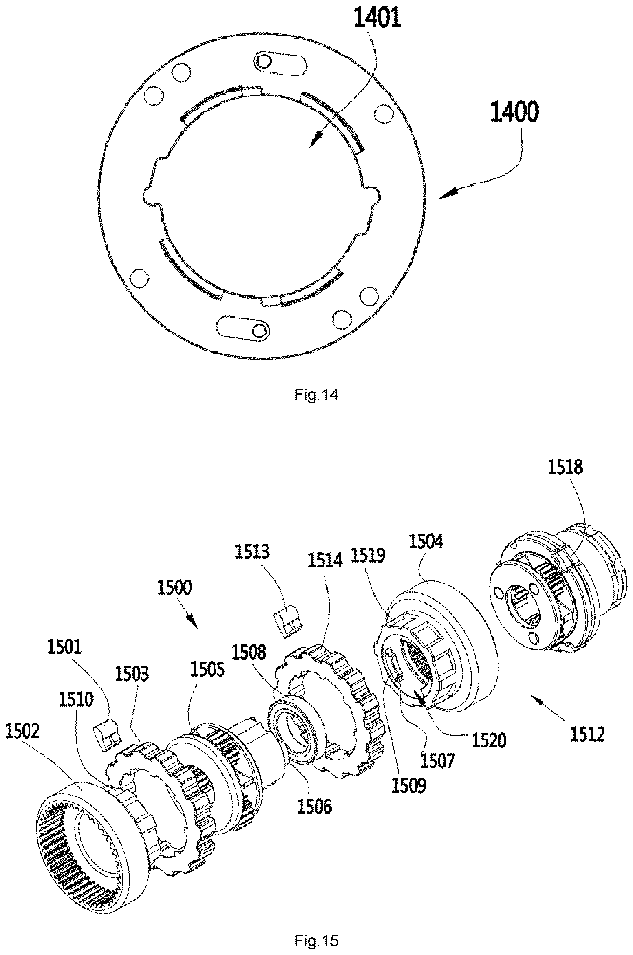

Referring to FIG. 12 and FIG. 15, a gear ring set 1512 of the second planetary gear set 1512 and the third planetary gear set 1500 are shown. The third planetary gear set 1500 includes a third planetary carrier 1505 matching with the second planetary gear set 1512. The third planetary carrier 1505 includes a fifth spline 1506 protruding from an end portion of the third planetary carrier 1505. The fourth spline 1519 internally includes three internal splines 1509 matching with the fifth spline 1506. Each internal spline 1509 is in an arc structure, with two ends thereof including an inner surface for an arc surface 1507 transitioning to the fourth spline 1519. The inner surface is arranged with the three internal splines 1509, reserving a certain space 1520 between them, and this space allows the fifth spline 1506 to enter and match with the fifth spline 1506. Through the matching of the fifth spline 1506 and the internal spline 1509 of the fourth spline 1519, power from the gear ring 1504 of the second planetary gear set 1512 can be transmitted to the planetary carrier 1505 of the third planetary gear set 1500. To keep stability, a ball bearing 1508 is included inside the fourth spline 1519 and on one side of the fifth spline 1506. The ball bearing 1508 is configured to support the gear ring 1504 of the second planetary gear set 1512, enabling it to have support at both axial ends for smoother and more stable rotation.

The gear ring 1502 of the third planetary gear set 1500 is sleeved onto the third planetary carrier 1505, and the third planetary carrier 1505 is driven by the internal spline 1509 of a second gear ring 1504 with the second rotational speed. The gear ring 1502, driven by the third planetary carrier 1505, has a third rotational speed. The third spline 1503 is assembled onto the sixth spline 1510 of the gear ring 1502. In the third gear, the gear ring 1502 matches with the third pawl 1501, allowing the hub housing 1210 to have the third rotational speed. The sixth spline 1510 is an external spline, which matches with an internal spline of the third spline 1503. The structure of the third clutch is identical to that of the second clutch, and is will not be described herein.

### Gear shifting process of the variable-speed hub

During gear shifting in this example, the action processes of the third centrifugal block 1516, a third clutch plate 1517, and the third pawl 1501 are identical to those in Example 1 and will not be elaborated here. The difference lies in that this example includes a total of three gears, corresponding to three rotational speeds of the hub housing 1210, with the third rotational speed > the second rotational speed > the first rotational speed.

In a preferred example of the present invention, during the acceleration of the hub/vehicle: when the rotational speed of the hub housing 1210 reaches the first rotational speed, the second pawl 1513 is decoupled from the second spline 1514, and the third pawl 1501 is decoupled from the third spline 1503. When the rotational speed of the hub housing 1210 reaches the second rotational speed, the first pawl 1518 is in an overtaking state, the second pawl 1513 is coupled with the second spline 1514, and the third pawl 1501 is decoupled from the third spline 1503. When the rotational speed of the hub housing1210 reaches the third rotational speed, the first pawl 1518 and the second pawl 1513 are in an overtaking state, and the third pawl 1501 is coupled with the third spline 1503. When the rotational speed of the hub housing 1210 is higher than the third rotational speed, all the first pawl 1518, the second pawl 1513, and the third pawl 1501 are in an overtaking state.

When the rotational speed of the hub housing 1210 is lower than the third rotational speed but higher than the second rotational speed, the third pawl 1501 is in a decoupled state, and the second pawl 1513 and the first pawl 1518 are in an overtaking state. When the hub housing 1210 is at the second rotational speed, the third pawl 1501 is in a decoupled state, the second pawl 1513 is in a coupled state, and the first pawl 1518 is in an overtaking state. When the rotational speed of the hub housing 1210 is lower than the second rotational speed but higher than the first rotational speed, the third pawl 1501 is in a decoupled state, the second pawl 1513 is also in a decoupled state, and the first pawl 1518 is in an overtaking state. When the hub housing 1210 is at the first rotational speed, the third pawl 1501 is in a decoupled state, the second pawl 1513 is in a decoupled state, and the first pawl 1518 is in a coupled state.

## Claims

1. A variable-speed hub, comprising:
a hub housing,
a first-level drive component, directly driving the hub housing via a first pawl, and
a second-level drive component, connected to the first-level drive component via a planetary gear set,
wherein,
the second-level drive component comprises a second clutch, the second clutch being fixed to the hub housing, rotating along with the hub housing, and being used for driving a second spline of the hub housing;
the second clutch comprises a second pawl that couples or decouples the power transmission relationship between the second spline and the hub housing according to a rotational speed of the hub housing; and
the second pawl is arranged on an outer peripheral side of the second spline.

2. The variable-speed hub according to claim 1, wherein the second spline comprises an external spline, and the second pawl is coupled with or decoupled from a plurality of spline parts of the external spline of the second spline.

3. The variable-speed hub according to claim 2, wherein the second pawl comprises a rotating shaft, and a drive arm connected to the rotating shaft and rotating around the rotating shaft, a distal end of the drive arm away from the rotating shaft being configured to couple with or decouple from the plurality of spline parts, the distal end being arranged at a position radially close to the plurality of spline parts, and the rotating shaft being arranged at a position radially away from the plurality of spline parts.

4. The variable-speed hub according to claim 3, wherein the distal end of the drive arm away from the rotating shaft has a first width, and a proximal end close to the rotating shaft has a second width, the first width being smaller than the second width, and an arc transition part being formed at the transition between the first width and the second width.

5. The variable-speed hub according to claim 4, wherein the plurality of spline parts comprises a matching groove configured to match with the distal end, and a driving surface and a circumferential outer arc surface that decouple the power transmission relationship between the second pawl and the second spline, the driving surface being a slope surface that inclines up to the circumferential outer arc surface.

6. The variable-speed hub according to claim 5, wherein when the second pawl overtakes the plurality of spline parts, the second pawl rises to the circumferential outer arc surface along the driving surface of the spline part located ahead in a rotation direction of the hub housing, and the arc transition part matches with the circumferential outer arc surface, allowing the distal end of the drive arm to deflect at a certain angle to be away from the circumferential outer arc surface; and the angle allows a retaining structure of a second clutch plate in the second clutch to match with a distal end of the second pawl, decoupling the power transmission relationship between the second pawl and the external spline of the second spline.

7. The variable-speed hub according to claim 2, wherein the external spline of the second spline comprises at least 12 or 14 spline parts.

8. The variable-speed hub according to claim 1, wherein the second clutch comprises the second clutch plate, a second centrifugal block, and the second pawl; the second centrifugal block is fixed to a second end cap of the hub housing via the rotating shaft; and the second end cap comprises a groove for accommodating the second pawl, and the groove comprises a shaft groove, and the rotating shaft of the second pawl is capable of rotating inside the shaft groove;
when the rotational speed of the hub housing is higher than a second rotational speed, the second centrifugal block drives the second clutch plate to rotate in a direction opposite to the rotation direction of the hub housing, allowing the second clutch plate to rotate to a first position where the second clutch plate couples the power transmission relationship between the second pawl and the external spline of the second spline; and
when the rotational speed of the hub housing is lower than the second rotational speed, the second centrifugal block drives the second clutch plate to rotate in the same direction as the rotation direction of the hub housing, allowing the second clutch plate to rotate to a second position where the second clutch plate decouples the power transmission relationship between the second pawl and the external spline of the second spline.

9. The variable-speed hub according to claim 1, wherein when the second pawl is coupled with the second spline, a bearing pressure on a matching surface is F=T/R1, R1 being a radius of the external spline of the second spline, and T being an input torque of a planetary gear set.

10. The variable-speed hub according to claim 1, further comprising:
a third-level drive component, connected to the second-level drive component via a planetary gear set;
the third-level drive component comprising a third clutch, the third clutch being fixed to the hub housing, rotating along with the hub housing, and being configured to drive a third spline of the hub housing;
the third clutch comprising a third pawl for coupling or decoupling the power transmission relationship between the third spline and the hub housing according to the rotational speed of the hub; and
the third pawl being arranged on an outer peripheral side of the third spline.
